# EUROPEAN PATENT SPECIFICATION

(11) **EP 2 537 720 B1**
(45) Date of publication and mention of the grant of the patent: **28.08.2013**
(21) Application number: 11425163.0
(22) Date of filing: 20.06.2011
(51) Int. Cl.: B60S 3/04

(54) **Apparatus for washing bicycles**
Vorrichtung zum Waschen von Fahrrädern
Appareil pour laver des bicyclettes

(43) Date of publication of application: 26.12.2012
(73) Proprietor: Tecnolazzeri F.LLI S.N.C. Di Lazzeri Walter e Giovanni, 23038 Valdidentro (SO) (IT)
(72) Inventor: Lazzeri, Giovanni, 23038 Valdidentro Sondrio (IT); Lazzeri, Walter, 23038 Valdidentro Sondrio (IT); Armanasco, Daniele, 23038 Valdidentro Sondrio (IT)
(74) Representative: Long, Giorgio

(56) References cited:
- DE-A1- 19 824 271
- DE-U1- 29 505 047
- DE-U1- 29 701 687

## Description

. The present invention concerns an apparatus for washing bicycles, in particular for automatically washing two-wheeled bicycles.

. In recent years the use of bicycles for off-road riding has become very common. So-called mountain-bikes constitute a means of transport suitable for riding even on very steep dirt roads, allowing the rider to reach destinations that were previously only accessible on foot and thus avoiding the use of main roads that are jammed with traffic and have a great deal of pollution in the air.

. Another sport that has recently taken off is so-called "down-hill" riding, which is carried out with specially made mountain-bikes, characterised by a strong and consequently very heavy frame. Down-hill riding involves going down along inaccessible routes, such as mountain paths or tracks, which are often muddy.

. The result is that, at the end of a mountainbiking or down-hill session, the bicycle is almost always covered with a layer of dirt, typically earth or mud, which, if not quickly removed, risks encrusting on the frame and in the gears. This would inevitably lead both to wearing of the bicycle and to its decreased functionality.

. These problems are even more evident in the case of rented bicycles, as often occurs for example in mountain village locations. Mountain-bikes intended for rental are subject to daily use and must therefore be cleaned at the end of each use.

. Conventional systems foresee the use of manual water-cleaners. Although these systems are substantially efficient, they require continuous intervention of the operator. Moreover, there is substantial water consumption, which is released into the environment together with the removed dirt and possibly with the detergents that are used in certain cases.

. Some more complex apparatuses have also been proposed, of the type of those used for washing automobiles, comprising a tunnel equipped with nozzles for dispensing washing water, through which the bicycle is passed automatically or semi-automatically. These apparatuses do, however, have the drawback of requiring substantial space for their installation.

DE-U-295 05 047 shows the preamble of claim 1.

. There is thus a need to provide a functional system for washing bicycles.

. An object of the invention is an apparatus for washing bicycles that is compact and small in size.

. The invention is useful both for washing mountain-bikes and for washing city-bikes, given the proliferation of bike sharing and of normal bicycles that ride along the ever-increasing number of bicycle lanes.

. The invention is also proposed, in a general use thereof, as a specific tool to be used in the overall maintenance of bicycles.

. A further object of the invention is an apparatus for washing bicycles that operates automatically or semi-automatically and that prevents the release of the washing liquid in the surrounding environment.

. Yet another object of the invention is an apparatus for washing bicycles that is equipped with a system for recovering and recycling the washing water.

. A further object of the invention is an apparatus for washing bicycles that reduces the intervention of the operator to a minimum both in the loading and washing step and that does not require excessive and repetitive physical effort to load it in the apparatus in the case of heavy bicycles.

. A further object of the invention is to make a machine with variable operativity according to whether it is necessary to wash a particularly dirty bicycle, like a mountain-bike, or a bicycle that is quicker and easier to wash, like everyday bicycles. Hence we will talk of intensive or soft treatment.

. Another characterising aspect of the invention is to be able to operate on products with variable dimensional characteristics, in particular bicycles of different sizes.

. These and other purposes are accomplished by an apparatus for washing bicycles as outlined in the attached claims, the definitions of which form an integral part of the present description.

. Further characteristics and advantages of the present invention will become clearer from the following description of an embodiment thereof given purely as a non-limiting example, in which:

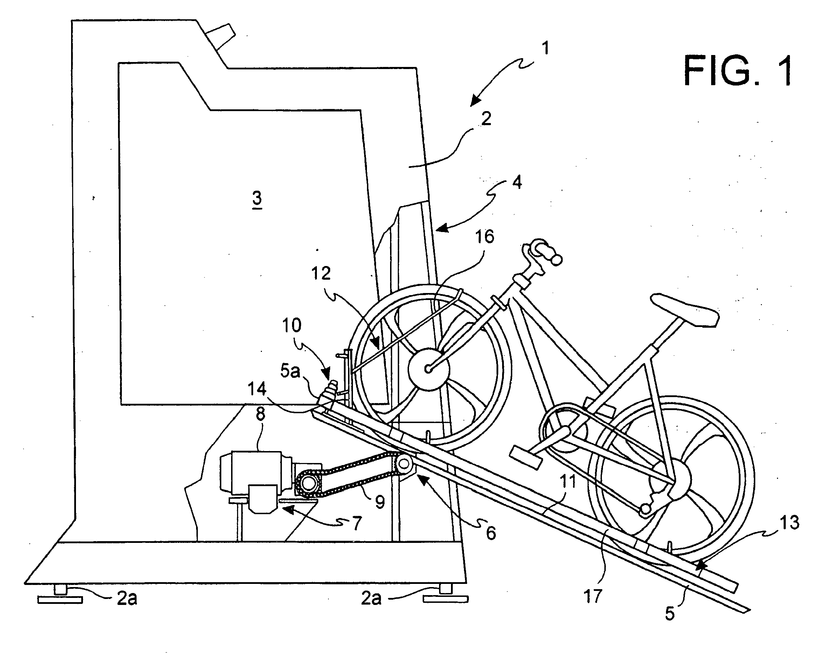

. Figure 1 represents a schematic side section view of the apparatus of the invention;

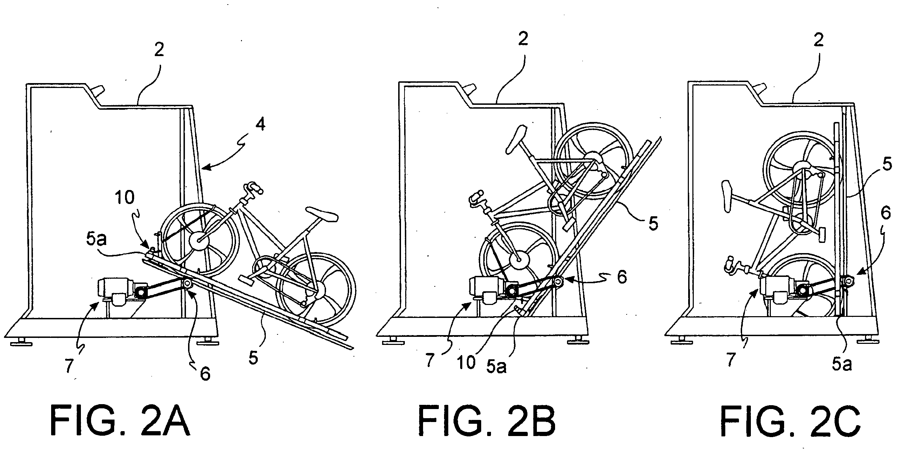

. Figures 2A, 2B and 2C represent the loading sequence of a bicycle into the apparatus of figure 1;

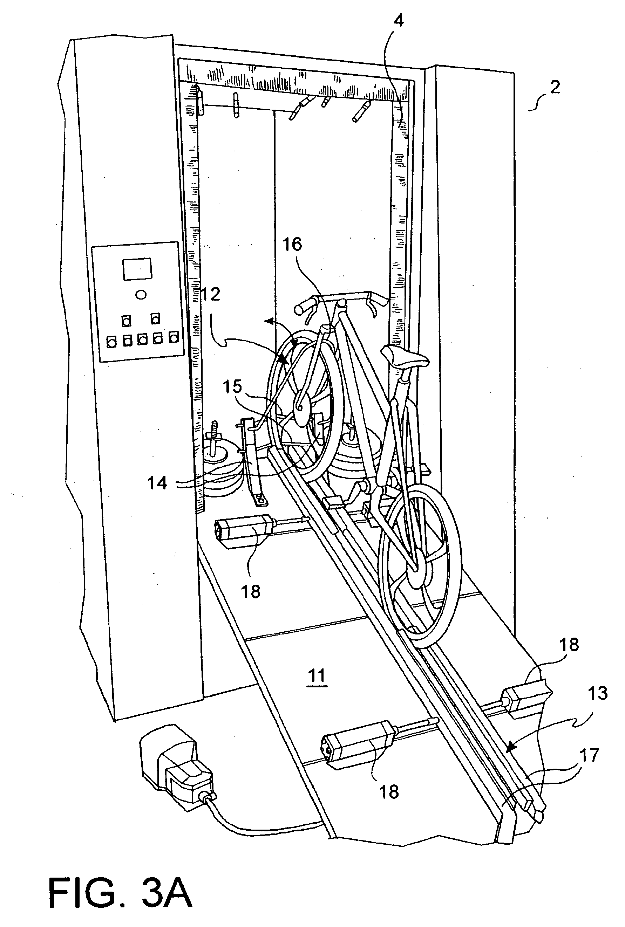

. Figure 3A represents a perspective view of the loading board of a bicycle into the apparatus of the invention;

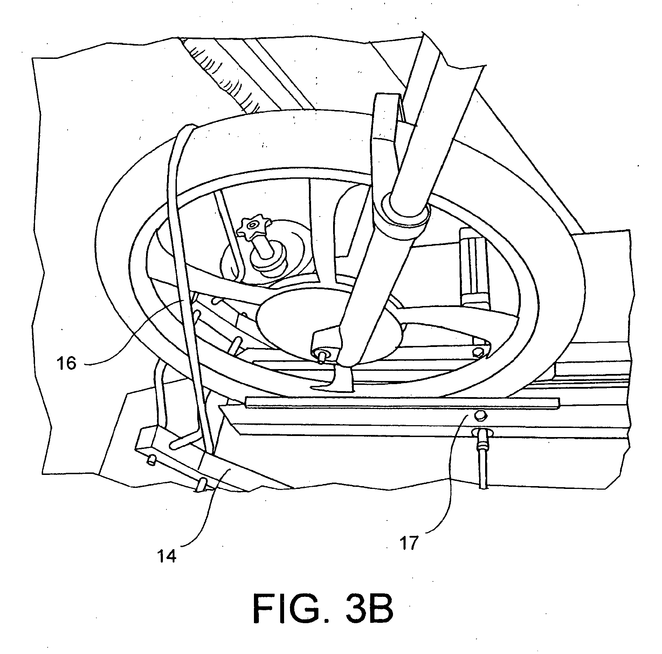

. Figure 3B represents a perspective view of a detail of the board of figure 3A;

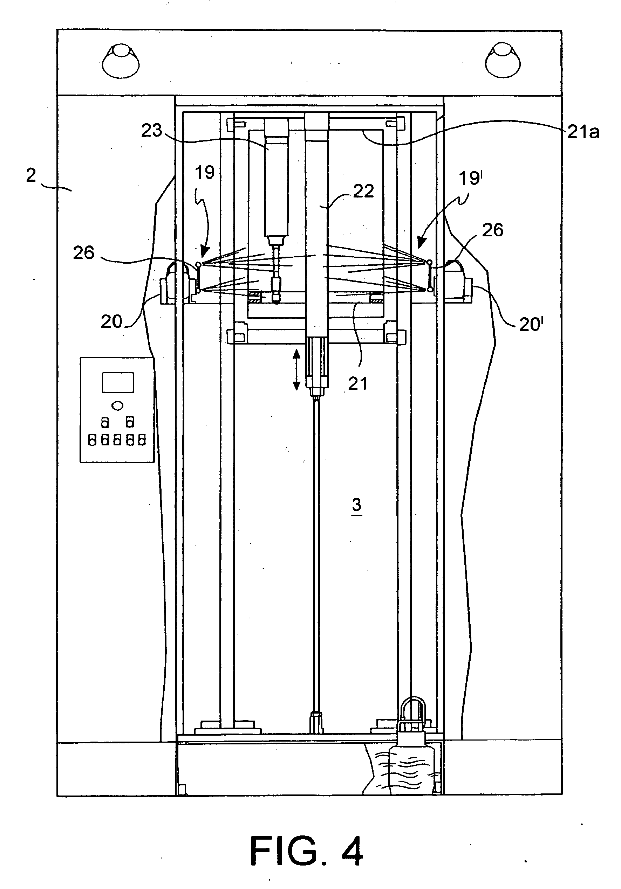

. Figure 4 represents a schematic front section view of the apparatus of the invention;

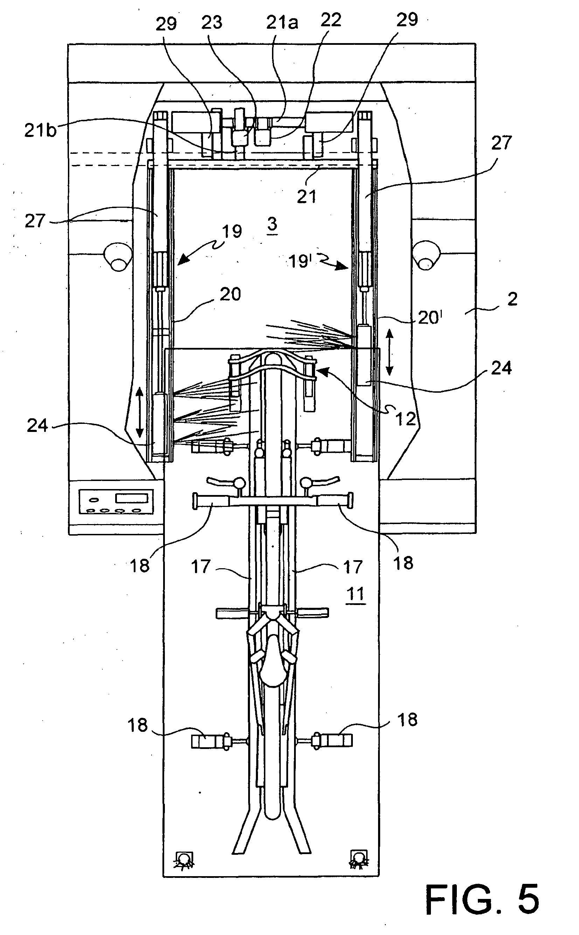

. Figure 5 represents a schematic section view from above of the apparatus of the invention;

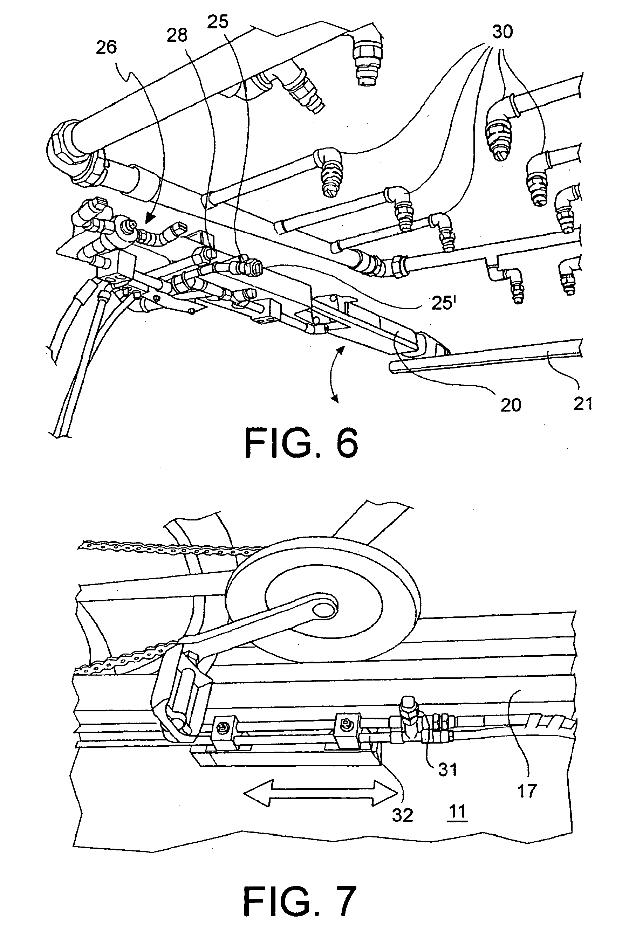

. Figure 6 represents a perspective view of a detail of the washing means of the apparatus of the invention;

**.** Figure 7 represents a perspective view of another detail of the washing means of the apparatus of the invention;

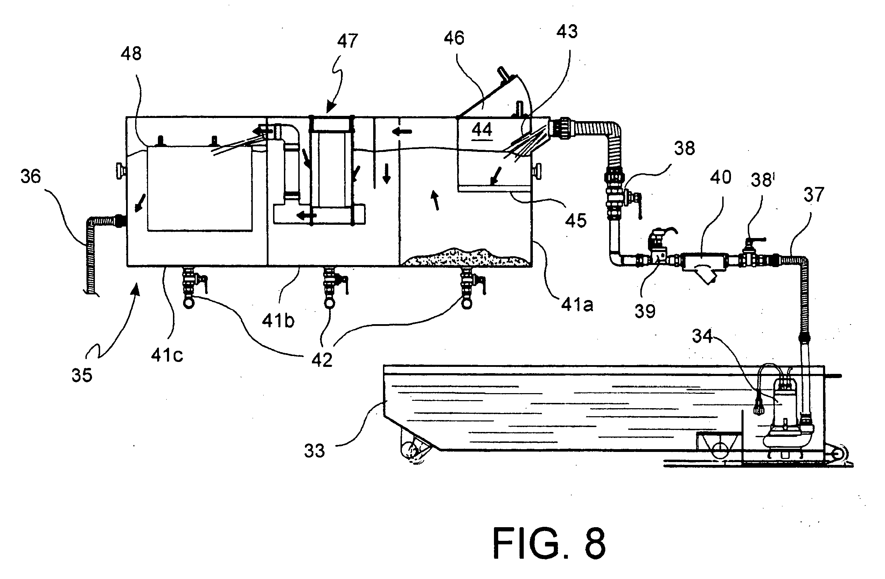

**.** Figure 8 represents a schematic side section view of the system for recovering and recycling the washing water of the apparatus of the invention;

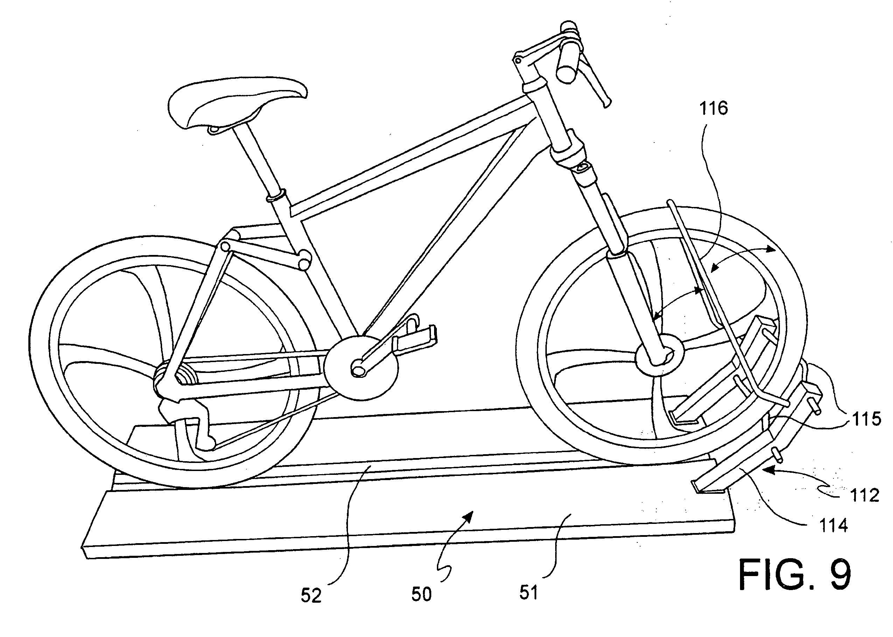

**.** Figure 9 represents a perspective view of a board for supporting a bicycle according to the invention;

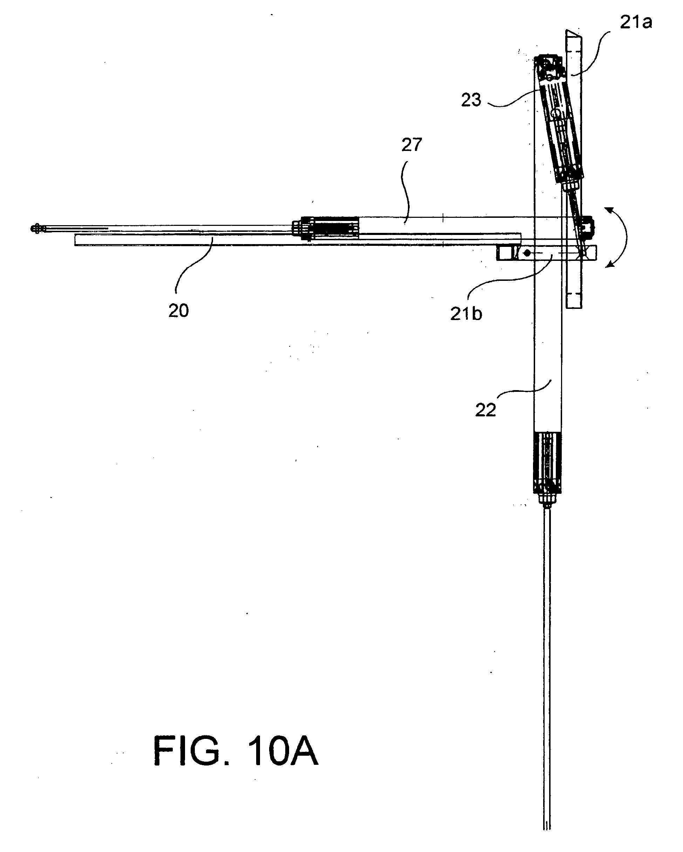

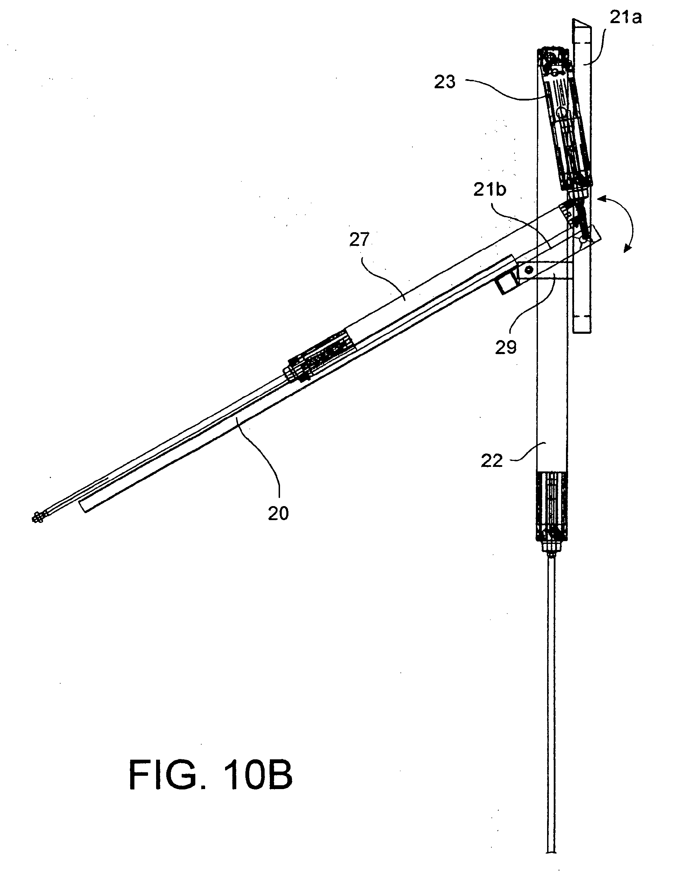

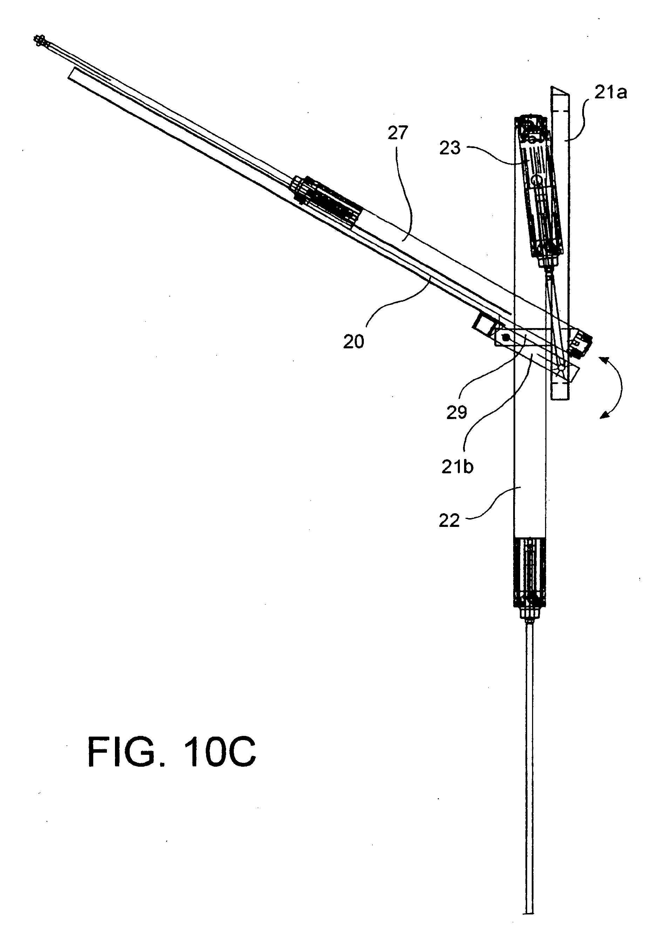

**.** Figures 10A, 10B and 10C represent a side view of a detail of the washing means of the apparatus of the invention, in three different operative conditions.

**.** With reference to the figures, the apparatus for washing bicycles, wholly indicated with reference numeral 1, comprises a casing 2 in which a washing chamber 3 is housed.

**.** The casing 2 rests on the floor or on any support surface by means of feet 2a.

**.** The casing 2 comprises an opening 4, substantially rectangular in shape and having dimensions such as to allow the introduction into the washing chamber 3 of a bicycle in vertical position.

**.** The opening 4 opens in a side wall of the casing 2 and it is closed by a door 5 hinged above the lower side of the opening 4 and able to tilt about a horizontal axis 6 - substantially parallel to the lower side of the opening 4 - between an open and loading position (figure 2A) and a closed position (figure 2C).

**.** The edges of the opening 4 and/or of the door 5 comprise sealing means, so that, when the door 5 is closed, the washing chamber 3 is water-tight.

**.** The opening and closing movement of the door 5 is carried out by actuator means 7, which, in the embodiment shown in the figures, consist of a gearmotor 8 connected through chain transmission means 9 with a pinion at the hinge of the door 5. At the lower end 5a of the door 5 calibrated ballast means 10 are positioned that aid the closing movement.

**.** In other embodiments, the actuator means 7 can consist of a pneumatic actuator.

**.** The ballast means 10 can be of the fixed type (like in the figures) or of the mobile type.

**.** The tilting axis 6 of the door 5 is arranged above the resting point of the casing 2 on the floor, for which reason the door 5, in open and loading position, has an inclined plane. Such an inclined plane comprises a loading board 11 for a bicycle.

**.** The loading board 11 comprises means for locking the bicycle. The locking means comprise a wheel-stop member 12 and jaw means 13.

**.** The wheel-stop member 12 comprises two side shafts 14, which extend obliquely from the board 11, joined by arched shafts 15 (in the figures, two shafts) substantially parallel to the board 11 and by a holding fork 16 that extends from the side shafts 14 in an oblique direction opposite that of the shafts. The holding fork 16, thanks to the fact that it is made from substantially elastic metallic material and to its shape, can be easily made to oscillate according to the arrows of figure 3A and thus has elastic properties.

**.** Whereas the arched shafts 15 act as stop means of the wheel of the bicycle, preventing it from advancing along the board 11, the holding fork 16 is intended to be positioned on the upper part of the wheel and, thanks to its elastic properties, to exert a holding pressure on the wheel itself when it is pushed against the arched shafts 15.

**.** The jaw means 13 comprise two mobile bars 17, arranged longitudinally on the board 11, which can be moved in the transversal direction between a position holding the wheels of the bicycle (shown for example in figures 3A and 3B) and a release position, away from the wheels of the bicycle. The movement of the mobile bars 17 is carried out by suitable actuator means 18, like for example pneumatic actuators.

**.** The mobile bars 17 have, on the side facing towards the wheels of the bicycle, a holding profile, like a rubber-coated profile, so as not to damage the wheel.

**.** Inside the washing chamber 3 there are means for washing the bicycle.

**.** The washing means comprise first and second mobile washing means 19, 19', arranged facing each other on opposite sides of the washing chamber 3, so as to spray both sides of the bicycle.

**.** The mobile washing means 19, 19' comprise respective substantially parallel arms 20, 20' connected by a transversal bar 21.

**.** The transversal bar 21 is associated with a support structure 21a on which actuator means 22, such as a pneumatic actuator, act and it is therefore mobile together with it in the vertical direction as indicated by the arrows of figure 4.

**.** The transversal bar 21 is hinged on joining elements 29 with the support structure 21a, so as to be able to rotate about the axis X. In this way, the arms 20, 20' can tilt as indicated by the arrows of figure 6 and in figures 10A, 10b and 10C. For this purpose, actuator means 23, for example a pneumatic actuator, act on a profile 21b fixedly connected to the transversal bar 21 and extending in the opposite direction to that of the bars 20, 20'.

**.** Each of the arms 20, 20' has a trolley 24 slidably housed on it, which carries one or more fixed nozzles 25, 25' and one or more rotary nozzles 26.

**.** At least one of the fixed nozzles 25 can be dedicated to dispensing a water/detergent mixture, whereas the remaining one(s) dispense water. The nozzles will be suitable for dispensing water or another washing fluid at a pressure sufficient to eliminate the encrustations present on the bicycle. Typically, such a pressure will be between 20 and 90 bar, according to the variable washing settings.

. The rotary nozzles 26 are mounted on a U-shaped fork, rotatably supported on the trolley 24 and set in rotation by the pressure of the water itself similarly to what occurs in garden watering devices.

**.** The trolley 24 also has one or more nozzles 28 mounted on it for dispensing compressed air for drying the bicycle at the end of washing.

**.** The trolley 24 is set in motion sliding along the bar 19, 19' by actuator means 27, for example pneumatic actuators.

**.** In this way, the trolley 24 of each of the two arms 20, 20' can be subjected to an alternate movement, as will be better described hereafter.

**.** In an embodiment (shown in figure 6), a series of fixed nozzles 30 is arranged in the upper part of the washing chamber 3 and faces downwards, so as to spray the bicycle being washed from above. Such nozzles can for example be used to pre-wash the bicycle.

**.** As shown in figure 7, one or more nozzles 31 for dispensing washing water are arranged on a trolley 32 slidably associated with the board 11. The trolley 32 is able to slide longitudinally as indicated by the arrows, thanks to suitable actuator means (for example a pneumatic actuator), on a suitable guide at the side of both of the mobile bars 17 of the jaw means 13.

**.** All of the nozzles of the washing means are connected, through suitable flexible or rigid pipes, to a washing fluid source, from which the fluid is pumped by means of one or more high or low pressure pumps, according to requirements.

**.** In an embodiment, shown in figure 8, the washing water is collected on the bottom of the washing chamber 3 in a tank 33, from where it is sent, thanks to suitable pumping means 34, typically an immersion pump, to a filtration and purification system 35 and from here, through a suitable pipe 36, to a recycling tank (not shown). From the recycling tank the water is picked up by means of the low or high pressure pumps and sent to the nozzles 25, 26, 30, 31 of the washing means.

**.** In an embodiment, the pipe 37 that connects the tank 33 to the filtration and purification system 35 can comprise valves 38, 38', a flow regulator 39 and a prefilter 40.

**.** The filtration and purification system 35 comprises a first, a second and a third container 41a, 41b, 41c arranged in sequence. The three containers can be equipped with respective blowdown valves 42.

**.** The first container 41a, at the entry opening 43 for the dirty washing water, comprises a coarse filtration chamber 44 that communicates with the remaining volume of the first container 41a through a grating 45. Such a grating 45 is suitable for holding the larger particulate. The chamber 44 can have an anti-spray barrier 46, which can be at least partially removed to allow the chamber 44 to be cleaned.

**.** In the first container 41a the washing water, still loaded with mud, is subjected to decanting and then passes by overflow into the second container 41b. In such a container there is a coalescer filter 47. The water, in which tiny drops of oil or grease (typically the lubricants used in bicycles) may have emulsified, enters into the coalescer filter as indicated by the arrows. The oils or greases condense in larger drops that collect on top of the filter, whereas the purified water is transferred into a basket with micrometric mesh 48 housed in the third container 41c, where the finer particles are separated. The water that collects in the third container 41c is then recycled to the washing means, possibly topped up with fresh water.

**.** There can also be means (not shown) for heating the washing water, so as to promote the washing process using water at a higher temperature than room temperature.

**.** The apparatus of the invention is completed by a command and control unit in which it is possible to set the washing, rinsing and drying cycles, according to requirements, and through which it is possible to even manually command the various operative steps. The command and control unit will also be operatively connected with level sensors in the tank 33 and in the filtration and purification system 35, so as to avoid them overflowing. The command and control unit also takes care of controlling the clamping operations of the bicycle (closing the jaw means), the step of flipping up (closing the door 5) and of repositioning the board (opening the door 5). Through position sensors, the command and control unit also supervises and manages the position and functionality of the washing means and the movement of the bicycle clamped on the board.

**.** The operation of the apparatus of the invention is as follows.

**.** The bicycle to be washed is initially loaded onto the loading board 11 making it run on the wheels, thus without needing to lift it. When the front wheel abuts with the arched shafts 15 and the holding fork 16 presses on the upper part of the wheel, the bicycle is held in position and can thus be released by the user. The mobile bars 17 are then brought into the position holding the wheels of the bicycle, for example by operating a suitable manual command, like a pedal, which activates the respective actuator means 18.

**.** At this point, the apparatus 1 is actuated, so as to sealably close the door 5 and then load the bicycle inside the washing chamber 3 in substantially vertical position.

**.** Optionally, a pre-washing is carried out by entering water through the upper nozzles 30.

**.** Then the washing cycle is started, which foresees the movement of the transversal bar 21, and then of the arms 20, 20', from the top towards the bottom. Once the actuator means 22 have reached the end stop, which corresponds to roughly the height of the handlebars of the bicycle, the actuator means 23 take care of tilting the arms 20, 20' downwards, completing the washing of the chassis of the bicycle.

**.** During the operations described above, the actuator means 27 of the trolleys 24 on which the nozzles 25, 26, 28 are mounted carry out an alternate movement that preferably occurs out of phase in the two arms 20, 20', so as to avoid crossing of the flows of washing water (see figure 5).

. At the same time, the nozzles 31 arranged on the trolley 32 associated with the loading board 11 also slide with alternate movement, so as to wash the under-chain area of the bicycle.

**.** Once the washing step is complete, the movement of the arms 20, 20' described above is continued, to allow the compressed air dispensed by the nozzles 28 to dry or at least eliminate most of the drops of water from the chassis of the bicycle.

**.** At the end of this operation the door 5 opens again and the jaw means 17 can be reopened, manually or automatically, thus freeing the wheels of the bicycle.

**.** The bicycle can be extracted by running it back down the inclined plane of the board 11, also in this case without any physical effort.

**.** The advantages of the apparatus for washing bicycles according to the invention are clear.

**.** The machine operates automatically or semi-automatically and does not foresee the lifting of the bicycle in any operative step, which, in the case of a mountain-bike, in particular for down-hill riding, would require substantial effort.

**.** The washing system is efficient and reaches all of the parts of the bicycle thanks to the arrangement of the nozzles and their tilting and alternate movement.

**.** There is no leaking of the washing water, since the washing chamber 3 is sealed. The washing water is also recovered, purified and recycled, decreasing the water consumption and protecting the environment from polluting discharges.

**.** The apparatus is compact and small in size. This advantage is obtained by arranging the bicycle vertically inside the washing chamber 3.

**.** A further object of the invention is a support board 50 for parking bicycles as shown in figure 9.

**.** The support board 50 comprises a substantially rectangular platform 51, equipped with a longitudinal groove 52 suitable for housing the wheels of a bicycle. At an end of the platform 51 there is a wheel-stop member 112, totally analogous to the one described above for the apparatus 1.

**.** The wheel-stop member 112 comprises two side shafts 114, which extend obliquely from the platform 51, joined by arched shafts 115 (in the figures two shafts) substantially parallel to the platform 51 and by a holding fork 116 that extends from the side shafts 114 in an oblique direction opposite that of the shafts. The holding fork 116, thanks to the fact that it is made from substantially elastic metallic material and to its shape, can easily be made to oscillate as indicated by the arrows and it thus has elastic properties.

**.** Whilst the arched shafts 115 acts as stop means of the wheel of the bicycle, preventing them from advancing along the platform 51, the holding fork 116 is intended to be positioned on the upper part of the wheel and, thanks to its elastic properties, to exert a holding pressure on the wheel itself when it is pushed against the arched shafts 115.

**.** In an embodiment, the platform 51 can be eliminated or reduced to a support of small dimensions, suitable for fixing the wheel-stop member 112 to the floor.

**.** The man skilled in the art can of course bring numerous variants to the invention without however departing from the scope of protection defined by the claims attached hereto.

**.** For example, the nozzles 28 for the compressed air can be replaced by dispensers suitable for generating a film of air that is better for drying.

## Claims

1. Apparatus (1) for washing bicycles, comprising a casing (2) in which a washing chamber (3) is housed, wherein inside the washing chamber (3) there are washing means, the casing (2) having an opening (4) able to be closed by means of a door (5) operated by actuator means (7), **characterised in that** the door (5) comprises a loading board (11) of the bicycle, so that, when the door (5) is closed, the bicycle is arranged in a substantially vertical position inside the washing chamber (3).

2. Apparatus (1) according to claim 1, wherein the door (5) is hinged above the lower side of the opening (4) and is able to tilt about a horizontal axis (6) substantially parallel to the lower side of the opening (4) - between and open and loading position and a closed position.

3. Apparatus (1) according to claim 1 or 2, wherein the washing chamber (3) is water-tight.

4. Apparatus (1) according to any one of claims 1 to 3, wherein, at the lower end (5a) of the door (5), calibrated ballast means (10) or else mobile ballast means are positioned, acting both on the lower end (5a) of the door (5) and on the tilting axis (6).

5. Apparatus (1) according to any one of claims 1 to 4, wherein the loading board (11) comprises means for locking the bicycle.

6. Apparatus (1) according to claim 5, wherein the means for locking the bicycle comprise a wheel-stop member (12) and jaw means (13).

7. Apparatus (1) according to claim 6, wherein the wheel-stop member (12) comprises two side shafts (14), which extend obliquely from the loading board (11), joined by arched shafts (15), substantially parallel to the loading board (11), and by a holding fork (16) that extends from the side shafts (14) in an oblique direction opposite that of the shafts, the holding fork (16) being made from a substantially elastic metallic material and having a shape such as to be positioned on the upper part of the wheel and, thanks to its elastic properties, to exert a holding pressure on the wheel itself when it is pushed against the arched shafts (15).

8. Apparatus (1) according to claim 6 or 7, wherein the jaw means (13) comprise two mobile bars (17), arranged longitudinally on the loading board (11), which can be moved transversally between a position holding the wheels of the bicycle and a release position, away from the wheels of the bicycle, the movement of the mobile bars (17) being carried out by actuator means (18).

9. Apparatus (1) according to any one of claims 1 to 8, wherein the washing means comprise first and second mobile washing means (19, 19'), arranged facing one another on opposite sides of the washing chamber (3), so as to spray both sides of the bicycle.

10. Apparatus (1) according to claim 9, wherein the mobile washing means (19, 19') comprise respective substantially parallel arms (20, 20') connected by a transversal bar (21), the transversal bar (21) being movable in the vertical direction by means of actuator means (22).

11. Apparatus (1) according to claim 10, wherein the arms (20, 20') are able to tilt about an axis (X) substantially parallel to the axis of the transversal bar (21) by means of actuator means (23).

12. Apparatus (1) according to any one of claims 9 to 11, wherein each of the arms (20, 20') has a trolley (24) slidably housed on it, which carries one or more fixed nozzles (25, 25') and one or more rotary nozzles (26) for dispensing washing water with or without detergent and one or more fixed nozzles (28) for dispensing compressed air, said rotary nozzles (26) being mounted on a U-shaped fork rotatably supported on the trolley (24), wherein each of the trolleys (24) is moved by respective actuator means (27) with alternate movement and optionally out of phase between the two arms (20, 20'); and wherein optionally a series of fixed nozzles (30) is arranged in the upper part of the washing chamber (3) and faces downwards.

13. Apparatus (1) according to any one of claims 9 to 12, wherein one or more nozzles (31) for dispensing washing water are arranged on a trolley (32) slidably associated with the loading board (11), the trolley (32) being able to slide longitudinally by means of actuator means on a suitable guide at the side of both of the mobile bars (17) of the jaw means (13).

14. Apparatus (1) according to any one of claims 1 to 13, wherein the apparatus comprises a tank (33) for collecting the dirty washing water, operatively connected to a filtration and purification system (35) and from here to the nozzles (25, 26, 30, 31) of the washing means for recycling the filtered water.

15. Apparatus (1) according to claim 14, wherein the filtration and purification system (35) comprises a first, a second and a third container (41a, 41b, 41c) arranged in sequence; wherein said first container (41a) comprises, at an entry opening (43) for the dirty washing water, a coarse filtration chamber (44) that communicates with the remaining volume of the first container (41a) through a grating (45) suitable for holding the larger particulate, said first container (41a) having a separation of the muds by decanting taking place in it; in which the decanted water is transferred to said second container (41b) by overflow, the second container (41b) having a coalescer filter (47) in it for separating the oils or greases in emulsion; wherein the water purified of oils or greases is transferred into a basket with micrometric mesh (48) housed in the third container (41c), where the finer particles are separated.

16. Apparatus (1) according to any one of claims 1 to 15, comprising a command and control unit for commanding and controlling the clamping operations, the step of turning upside down, the washing, rinsing and drying cycles, according to requirements and the repositioning of the board, the command and control unit being optionally operatively connected with level sensors in the tank (33) and in the filtration and purification system (35), so as to avoid them overflowing.

## Patentansprüche

1. Vorrichtung (1) zum Waschen von Fahrrädern, umfassend ein Gehäuse (2), in welchem eine Waschkammer (3) aufgenommen ist, wobei sich innerhalb der Waschkammer (3) Mittel zum Waschen befinden, wobei das Gehäuse (2) eine Öffnung (4) aufweist, welche in der Lage ist, mittels einer von Aktuatormitteln (7) betriebenen Tür (5) geschlossen zu werden, **dadurch gekennzeichnet, dass** die Tür (5) ein Ladebrett (11) des Fahrrads umfasst, so dass, wenn die Tür (5) geschlossen ist, das Fahrrad in einer im Wesentlichen vertikalen Position innerhalb der Waschkammer (3) angeordnet ist.

2. Vorrichtung (1) nach Anspruch 1, wobei die Tür (5) über der unteren Seite der Öffnung (4) angelenkt ist und dazu in der Lage ist, sich um eine im Wesentlichen parallel zu der unteren Seite der Öffnung (4) verlaufende horizontale Achse (6) zwischen einer offenen und LadePosition und einer geschlossenen Position zu neigen.

3. Vorrichtung (1) nach Anspruch 1 oder 2, wobei die Waschkammer (3) wasserdicht ist.

4. Vorrichtung (1) nach einem der Ansprüche 1 bis 3, wobei an dem unteren Ende (5a) der Tür (5) kalibrierte Ballastmittel (10) oder aber bewegliche Ballastmittel positioniert sind, welche sowohl auf das untere Ende (5a) der Tür (5) als auch auf die Neigeachse (6) einwirken.

5. Vorrichtung (1) nach einem der Ansprüche 1 bis 4, wobei das Ladebrett (11) Mittel zum Arretieren des Fahrrads umfasst.

6. Vorrichtung (1) nach Anspruch 5, wobei die Mittel zum Arretieren des Fahrrads ein Radanschlagelement (12) und Klemmmittel (13) umfassen.

7. Vorrichtung (1) nach Anspruch 6, wobei das Radanschlagelement (12) zwei Seitenschäfte (14) umfasst, welche sich schräg von dem Ladebrett (11) erstrecken, verbunden durch gebogene Schäfte (15), im Wesentlichen parallel zum Ladebrett (11), und durch eine Haltegabel (16), die sich von den Seitenschäften (14) in einer den Schäften entgegengesetzten gebogenen Richtung erstreckt, wobei die Haltegabel (16) aus einem im Wesentlichen elastischen metallischen Material hergestellt ist und eine Form aufweist, um auf dem oberen Teil des Rads positioniert zu sein und aufgrund ihrer elastischen Eigenschaften einen Haltedruck auf das Rad selbst ausübt, wenn es gegen die gebogenen Schäfte (15) gedrückt ist.

8. Vorrichtung (1) nach Anspruch 6 oder 7, wobei die Klemmmittel (13) zwei bewegliche Stangen (17) umfassen, welche längs an dem Ladebrett (11) angeordnet sind, welche zwischen einer die Räder des Fahrrads haltenden Position und einer Freigabeposition weg von den Rädern des Fahrrads quer bewegbar sind, wobei die Bewegung der beweglichen Stangen (17) durch Aktuatormittel (18) ausgeführt wird.

9. Vorrichtung (1) nach einem der Ansprüche 1 bis 8, wobei die Mittel zum Waschen erste und zweite bewegliche Mittel zum Waschen (19, 19') umfassen, welche an entgegengesetzten Seiten der Waschkammer (3) einander zugewandt angeordnet sind, um beide Seiten des Fahrrads zu besprühen.

10. Vorrichtung (1) nach Anspruch 9, wobei die beweglichen Mittel zum Waschen (19, 19') jeweilige im Wesentlichen parallele Arme (20, 20') umfassen, welche durch eine Querstange (21) verbunden sind, wobei die Querstange (21) in vertikaler Richtung mittels der Aktuatormittel (22) bewegbar ist.

11. Vorrichtung (1) nach Anspruch 10, wobei die Arme (20, 20') dazu in der Lage sind, sich um eine im Wesentlichen parallel zu der Achse der Querstange (21) verlaufende Achse (X) mittels der Aktuatormittel (23) zu neigen.

12. Vorrichtung (1) nach einem der Ansprüche 9 bis 11, wobei jeder der Arme (20, 20') ein gleitend darin aufgenommenes Laufelement (24) aufweist, welches eine oder mehrere feststehende Düsen (25, 25') und eine oder mehrere Rotationsdüsen (26) zum Abgeben von Waschwasser mit oder ohne Reinigungsmittel und eine oder mehrere feststehende Düsen (28) zum Abgeben komprimierter Luft trägt, wobei die Rotationsdüsen (26) an einer U-förmigen Gabel angebracht sind, welche an dem Laufelement (24) rotierbar getragen sind, wobei jedes der Laufelement (24) durch jeweilige Aktuatormittel (27) mit sich abwechselnder Bewegung und optional phasenverschoben zwischen den beiden Armen (20, 20') bewegt wird; und wobei optional eine Reihe feststehender Düsen (30) in dem oberen Teil der Waschkammer (3) angeordnet ist und nach unten weist.

13. Vorrichtung (1) nach einem der Ansprüche 9 bis 12, wobei eine oder mehrere Düsen (31) zum Abgeben von Waschwasser an einem gleitend mit dem Ladebrett (11) in Zusammenhang stehenden Laufelement (32) angeordnet sind, wobei das Laufelement (32) dazu in der Lage ist, mittels Aktuatormitteln an einer geeigneten Führung an der Seite der beiden beweglichen Stangen (17) der Klemmmittel (13) längs zu gleiten.

14. Vorrichtung (1) nach einem der Ansprüche 1 bis 13, wobei die Vorrichtung einen Tank (33) zum Sammeln des schmutzigen Waschwassers umfasst, welcher betriebsmäßig mit einem Filtrations- und Reinigungssystem (35) und von hier mit den Düsen (25, 26, 30, 31) der Mittel zum Waschen zum Wiederaufbereiten des gefilterten Wassers verbunden ist.

15. Vorrichtung (1) nach Anspruch 14, wobei das Filtrations- und Reinigungssystem (35) einen ersten, einen zweiten und einen dritten Behälter (41 a, 41 b, 41 c) umfasst, welche in Reihe angeordnet sind; wobei der erste Behälter (41 a) an einer Einlassöffnung (43) für das schmutzige Waschwasser eine grobe Filtrationskammer (44) umfasst, welche mit dem verbleibenden Volumen des ersten Behälters (41 a) über ein zum Zurückhalten der größeren Partikel geeignetes Gitter (45) in Verbindung steht, wobei der erste Behälter (41 a) eine Separation der Schlämme durch in ihm stattfindendes Dekantieren aufweist; in welchem das dekantierte Wasser zu dem zweiten Behälter (41 b) durch Überlauf überführt wird, wobei der zweite Behälter (41 b) einen Coalescer-Filter (47) in ihm zum Separieren der Öle oder Fette in Emulsion aufweist; wobei das von Ölen oder Fetten gereinigte Wasser in einen Korb mit mikrometrischem Gitter (48) überführt wird, welches in dem dritten Behälter (41 c) aufgenommen ist, wo die feineren Partikel separiert werden.

16. Vorrichtung (1) nach einem der Ansprüche 1 bis 15, umfassend eine Anweisungs- und Regelungs-/Steuerungseinheit zum Anweisen und Regeln/Steuern der Klemmvorgänge, des Schritts des Auf-den-Kopf-Stellens, der Wasch-, Abspül- und Trockenzyklen, gemäß Anforderungen und der Umpositionierung des Bretts, wobei die Anweisungs- und Regelungs-/Steuerungseinheit optional betriebsmäßig mit Niveausensoren in dem Tank (33) und in dem Filtrations- und Reinigungssystem (35) verbunden ist, um zu vermeiden, dass diese überlaufen.

## Revendications

1. Appareil (1) pour laver des bicyclettes, comprenant une carcasse (2) dans laquelle une chambre de lavage (3) est logée, dans lequel à l'intérieur de la chambre de lavage (3), il y a des moyens de lavage, la carcasse (2) ayant une ouverture (4) pouvant être fermée au moyen d'une porte (5) actionnée par des moyens formant actionneur (7), **caractérisé en ce que** la porte (5) comprend une planche de chargement (11) de la bicyclette, de sorte que, lorsque la porte (5) est fermée, la bicyclette est agencée dans une position sensiblement verticale à l'intérieur de la chambre de lavage (3).

2. Appareil (1) selon la revendication 1, dans lequel la porte (5) est articulée au-dessus du côté inférieur de l'ouverture (4) et peut s'incliner autour d'un axe horizontal (6) sensiblement parallèle au côté inférieur de l'ouverture (4) - entre une position ouverte et de chargement et une position fermée.

3. Appareil (1) selon la revendication 1 ou 2, dans lequel la chambre de lavage (3) est étanche à l'eau.

4. Appareil (1) selon l'une quelconque des revendications 1 à 3, dans lequel, au niveau de l'extrémité inférieure (5a) de la porte (5), des moyens de lest calibré (10) ou bien des moyens de lest mobile sont positionnés, agissant à la fois sur l'extrémité inférieure (5a) de la porte (5) et sur l'axe d'inclinaison (6).

5. Appareil (1) selon l'une quelconque des revendications 1 à 4, dans lequel la planche de chargement (11) comprend des moyens pour bloquer la bicyclette.

6. Appareil (1) selon la revendication 5, dans lequel les moyens pour bloquer la bicyclette comprennent un élément d'arrêt de roue (12) et des moyens formant mâchoire (13).

7. Appareil (1) selon la revendication 6, dans lequel l'élément d'arrêt de roue (12) comprend deux arbres latéraux (14), qui s'étendent obliquement à partir de la planche de chargement (11), assemblés par des arbres arqués (15) sensiblement parallèles à la planche de chargement (11) et par une fourche de maintien (16) qui s'étend à partir des arbres latéraux (14) dans une direction oblique opposée à celle des arbres, la fourche de maintien (16) étant réalisée à partir d'un matériau métallique sensiblement élastique et ayant une forme telle qu'elle peut être positionnée sur la partie supérieure de la roue et grâce à ses propriétés élastiques, pour exercer une pression de maintien sur la roue elle-même lorsqu'elle est poussée contre les arbres arqués (15).

8. Appareil (1) selon la revendication 6 ou 7, dans lequel les moyens formant mâchoire (13) comprennent deux barres mobiles (17) agencées longitudinalement sur la planche de chargement (11), qui peuvent être déplacées transversalement entre une position maintenant les roues de la bicyclette et une position de libération à distance des roues de la bicyclette, le mouvement des barres mobiles (17) étant réalisé par les moyens formant actionneur (18).

9. Appareil (1) selon l'une quelconque des revendications 1 à 8, dans lequel les moyens de lavage comprennent des premiers et seconds moyens de lavage mobiles (19, 19') agencés en face les uns des autres sur les côtés opposés de la chambre de lavage (3), afin de vaporiser les deux côtés de la bicyclette.

10. Appareil (1) selon la revendication 9, dans lequel les moyens de lavage mobiles (19, 19') comprennent des bras sensiblement parallèles (20, 20') respectifs raccordés par une barre transversale (21), la barre transversale (21) étant mobile dans la direction verticale au moyen des moyens formant actionneur (22).

11. Appareil (1) selon la revendication 10, dans lequel les bras (20, 20') peuvent s'incliner autour d'un axe (X) sensiblement parallèle à l'axe de la barre transversale (21) au moyen des moyens formant actionneur (23).

12. Appareil (1) selon l'une quelconque des revendications 9 à 11, dans lequel chacun des bras (20, 20') a un chariot (24) logé de manière coulissante à l'intérieur de ce dernier, qui porte une ou plusieurs buses fixes (25, 25') et une ou plusieurs buses rotatives (26) pour distribuer de l'eau de lavage avec ou sans détergent et une ou plusieurs buses fixes (28) pour distribuer de l'air comprimé, lesdites buses rotatives (26) étant montées sur une fourche en forme de U supportée en rotation sur le chariot (24), dans lequel chacun des chariots (24) est déplacé par les moyens formant actionneur (27) respectifs avec un mouvement de va-et-vient et facultativement déphasé entre les deux bras (20, 20') ; et dans lequel facultativement une série de buses fixes (30) est agencée dans la partie supérieure de la chambre de lavage (3) et est orientée vers le bas.

13. Appareil (1) selon l'une quelconque des revendications 9 à 12, dans lequel une ou plusieurs buses (31) pour distribuer l'eau de lavage sont agencées sur un chariot (32) associé de manière coulissante à la planche de chargement (11), le chariot (32) pouvant coulisser de manière longitudinale au moyen des moyens formant actionneur sur un guide approprié sur le côté des deux barres mobiles (17) des moyens formant mâchoire (13).

14. Appareil (1) selon l'une quelconque des revendications 1 à 13, dans lequel l'appareil comprend un réservoir (33) pour collecter l'eau de lavage sale, raccordé de manière opérationnelle à un système de filtration et de purification (35) et à partir de là aux buses (25, 26, 30, 31) des moyens de lavage pour recycler l'eau filtrée.

15. Appareil (1) selon la revendication 14, dans lequel le système de filtration et de purification (35) comprend un premier, un deuxième et un troisième récipient (41a, 41b, 41c) agencés de manière séquentielle ; dans lequel ledit premier récipient (41a) comprend, au niveau d'une ouverture d'entrée (43) pour l'eau de lavage sale, une chambre de filtration grossière (44) qui communique avec le volume résiduel du premier récipient (41a) par le biais d'une grille (45) appropriée pour contenir les plus grosses particules, ledit premier récipient (41a) ayant une séparation des boues par décantation qui a lieu dans ce dernier ; dans lequel l'eau décantée est transférée dans ledit deuxième récipient (41b) par débordement, le deuxième récipient (41b) ayant un filtre coalesceur (47) dans ce dernier pour séparer les huiles ou les graisses en émulsion ; dans lequel l'eau purifiée des huiles ou des graisses est transférée dans un panier avec une maille micrométrique (48) logée dans le troisième récipient (41c), où les particules plus fines sont séparées.

16. Appareil (1) selon l'une quelconque des revendications 1 à 15, comprenant une unité de commande et de contrôle pour commander et contrôler les opérations de serrage, l'étape de retournement, le lavage, les cycles de rinçage et de séchage, selon les exigences et le repositionnement de la planche, l'unité de commande et de contrôle étant raccordée de manière opérationnelle et facultative avec des capteurs de niveau dans le réservoir (33) et dans le système de filtration et de purification (35) afin de leur éviter le débordement.
